(19) Europäisches Patentamt / European Patent Office / Office européen des brevets

(11) **EP 4 451 012 B1**

(12) **EUROPEAN PATENT SPECIFICATION**

(45) Date of publication and mention
of the grant of the patent:
**05.08.2026 Bulletin 2026/32**

(21) Application number: **23168699.9**

(22) Date of filing: **19.04.2023**

(51) International Patent Classification (IPC):
*G01S 13/931* (2020.01)     *G01S 13/89* (2006.01)
*G01S 17/89* (2020.01)      *G01S 17/931* (2020.01)
*G01S 7/48* (2006.01)       *G01S 7/41* (2006.01)

(52) Cooperative Patent Classification (CPC):
**G01S 13/931; G01S 7/41; G01S 7/4802;
G01S 13/89; G01S 17/89; G01S 17/931**

(54) **METHOD AND SYSTEM FOR ESTIMATING AN OBJECT SIZE USING RANGE SENSOR DETECTIONS**

VERFAHREN UND SYSTEM ZUR SCHÄTZUNG EINER OBJEKTGRÖSSE MIT ENTFERNUNGSSENSORDETEKTIONEN

PROCÉDÉ ET SYSTÈME D'ESTIMATION DE TAILLE D'OBJET À L'AIDE DE DÉTECTIONS DE CAPTEUR DE DISTANCE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**23.10.2024 Bulletin 2024/43**

(73) Proprietor: **Aptiv Technologies AG
8200 Schaffhausen (CH)**

(72) Inventors:
• **SNIEGUCKI, Mateusz
30-716 Kraków (PL)**
• **DYRDON, Pawel
42-400 Zawiercie (PL)**

(74) Representative: **Bardehle Pagenberg
Partnerschaft mbB
Patentanwälte Rechtsanwälte
Prinzregentenplatz 7
81675 München (DE)**

(56) References cited:
**EP-A2- 1 298 454      DE-A1- 102019 107 650
US-A1- 2018 322 650    US-A1- 2022 205 779
US-A1- 2022 206 162**

# Description

## Field of the invention

The present application relates to the field of range sensors, and more particular to a method, a system and a computer-readable storage medium for estimating an object size using range sensor detections.

## Background

In the field of automotive advanced safety and autonomous driving, range sensors such as LiDAR and radar sensors are employed in order to allow vehicles to perceive their surroundings and to detect objects therein. Detected objects can be tracked, e.g., to estimate an object's position, speed, heading, or size.

Objects that are tracked via detections provided by range sensors may be represented by bounding boxes. The size of a respective bounding box is considered to correspond to the real size, i.e., width and length of a corresponding tracked object.

However, the accuracy of a size estimate for a bounding box of a tracked object suffers when the amount of detections decreases over time, which may result in a shrinking bounding box.

Accordingly, there is a need for improved systems and methods for estimating an object size using range sensor detections while avoiding the above discussed problems.

DE 10 2019 107650 A1 relates to a method for object shape detection based on two types of environmental sensors used in a driving support system of a vehicle EP 1 298 454 A2 relates to object tracking and involves using a Kalman filter.

US 2018/322650 A1 relates to tracking vehicles proximate perceived by an autonomous vehicle.

US 2022/206162 A1 discloses techniques for determining an object contour.

US 2022/205779 A1 relates to an object size estimation device and method.

## Summary of the invention

The invention is defined in the appended independent claims. Advantageous embodiments of the invention are defined in the dependent claims.

One aspect of the present invention relates to a computer-implemented method for estimating an object size using range sensor detections detected by a range sensor mounted on a host vehicle. For an object detected by the range sensor detections, the method comprises the following steps performed over time: determining, based on the range sensor detections, pseudo measurements of dimensions of a bounding box enclosing the detected object; and determining estimates for the dimensions of the bounding box, based on respective previous pseudo measurements and current pseudo measurements, wherein the estimates are determined by taking into account a confidence measure for the range sensor detections; and determining the object size based on the estimates. The estimates are determined by applying a Kalman filter. Prior to the determining of the pseudo measurements, the method comprises for each pseudo measurement based on a range sensor detection outside the current bounding box, weighting the range sensor detection higher compared to a range sensor detection inside the current bounding box by increasing the estimate uncertainty for the respective dimension of the bounding box by a first factor.

By taking into account a confidence measure for the range sensor detections, i.e., by using additional statistical data regarding a confidence for the range sensor detections, the proposed method allows an estimation of the size of a detected object more accurately compared to known approaches. In particular, the invention avoids the above mentioned problems of a fluctuating or shrinking bounding box.

In an embodiment, the confidence measure for the range sensor detections is a measurement uncertainty of each pseudo measurement, wherein the estimates are determined by taking into account the measurement uncertainty of each pseudo measurement.

In a further embodiment, the measurement uncertainty of each pseudo measurement is calculated based on an object distance d of the detected object to the host and an orientation $\alpha$ of the detected object towards the host.

In some embodiments, the range sensor detections include at least one of LiDAR detections, provided by a LiDAR sensor; and radar detections, provided by a radar sensor.

In a further embodiment, the dimensions of the bounding box include a width and a length, wherein the width is defined by distances measured from a reference point relative to a longitudinal axis of the detected object, and wherein the length is defined by distances measured from the reference point relative to a lateral axis of the detected object.

In a further embodiment, the width of the bounding box is defined by a sum of a first width extending, relative to the longitudinal axis, to the left from the reference point and a second width extending, relative to the longitudinal axis, to the right from the reference point. The length of the bounding box is defined by a sum of a first length extending, relative to the lateral axis, to the back from the reference point and a second length extending, relative to the lateral axis, to the front from the reference point.

In a further embodiment, determining the pseudo measurements of the dimensions of the bounding box comprises, over time, determining a pseudo measurement for each of the distances measured from the reference point by expanding each respective distance to the associated respective outer most range sensor detections with respect to the reference point.

According to a further embodiment, the measurement uncertainty of the pseudo measurements of the first and second lengths is defined by

$$r_{len} = a_l \cdot \frac{d}{\sin(\alpha)} + b_l$$

and the measurement uncertainty of the pseudo measurements of the first and second widths is defined by

$$r_{wid} = a_w \cdot \frac{d}{\cos(\alpha)} + b_w$$

wherein $a_l$, $b_l$, $a_w$, $b_w$ are calibration parameters.

In a further embodiment, prior to the determining of the pseudo measurements, the method comprises, if the detected object is at least partly occluded, stopping the determining of estimates until the detected object is no longer occluded, effectively freezing the determining of estimates.

In a further embodiment, prior to the determining of the pseudo measurements, the method comprises, if the detected object is merged with a further object detected by the range sensor detections, increasing, for each of the pseudo measurements of the respective distances measured from the reference point, the respective estimate uncertainty by a second factor.

In a further embodiment, the method further comprises at least one of determining a movement instruction for the host vehicle based on the determined object size; using the determined object size in a path planning or parking aid sub-system of the host vehicle; and using the determined object size for a driving function, wherein the driving function is one of blind spot warning, lane change assist, automatic emergency braking, and evasive steering.

Another aspect of the present invention relates to a system comprising means for performing the steps of the above described method.

Still another aspect of the present invention relates to a computer-readable storage medium comprising instructions which, when executed by a computer, cause the computer to carry out the above described method.

**Brief description of the drawings**

In order to best describe the manner in which the above-described embodiments are implemented, as well as define other advantages and features of the disclosure, a more particular description is provided below and is illustrated in the appended drawings. Understanding that these drawings depict only exemplary embodiments of the invention and are not therefore to be considered to be limiting in scope, the examples will be described and explained with additional specificity and detail through the use of the accompanying drawings in which:

Fig. 1     illustrates an object tracking scenario;
Fig. 2     illustrates the use of pseudo size measurements based on range sensor detections to estimate the size of an object;
Fig. 3     illustrates a computer-implemented method for estimating an object size using range sensor detections according to the invention;
Fig. 4     illustrates a model of measurement uncertainty according to the invention;
Figs. 5 and 6     illustrate the use of a Kalman Filter to estimate the size of a detected object according to the invention; and
Fig. 7     illustrates an example scenario with object occlusion.

**Detailed description**

Various embodiments of the disclosed methods and arrangements are discussed in detail below. While specific implementations are discussed, it should be understood that this is done for illustration purposes only.

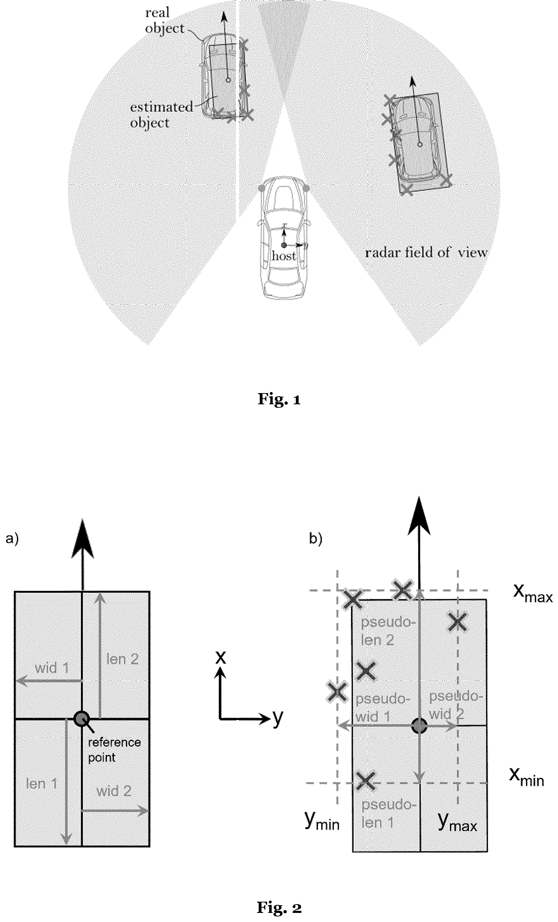

Fig. 1 illustrates an object tracking scenario. A host, such as a vehicle, is equipped with a range sensor, such as a LiDAR sensor or a radar sensor. It should be noted that any range sensor may be employed to acquire range detections. The detections allow to track corresponding objects in the surrounding of the host, such as the two vehicles shown in Fig. 1. The goal of object tracking using range sensor detections is to estimate an object's position, speed, heading, and/or size.

As illustrated in Fig. 1, objects that are tracked via detections provided by range sensors may be represented by bounding boxes. The size of a respective bounding box is considered to correspond to the real object size, i.e., width and length of a corresponding tracked object. In Fig. 1, the range sensor detections are illustrated by crosses.

Fig. 2 illustrates the use of pseudo size measurements based on range sensor detections to estimate the size of an object. The size of a detected object may be described by its bounding box, and is represented by four distances wid_1, wid_2, len_1, len_2, as shown in Fig. 2a. The four distances are measured from a predetermined reference point of the object, which defines its position. At every time step of the estimation process, these widths and lengths are the output of the size estimator, such as a Kalman filter.

For estimating the size of a detected object, the bounding box's boundaries are expanded to the outer most associated detections. Fig. 2b shows the respective resulting measured "pseudo-" lengths and widths. These pseudo measurements are used to estimate the size of the respective object.

The resulting estimates may be lowpass filtered over time, which however merely reflects a current spread of detections with additional smoothing rather than representing an estimate of the real object size. As a result, the determined object bounding box may fluctuate. i.e., its width and length may change in value, depending on currently available range sensor detections. Further, the accuracy of a size estimate my suffer when an amount of detections decreases over time, which in turn may result in a shrinking bounding box.

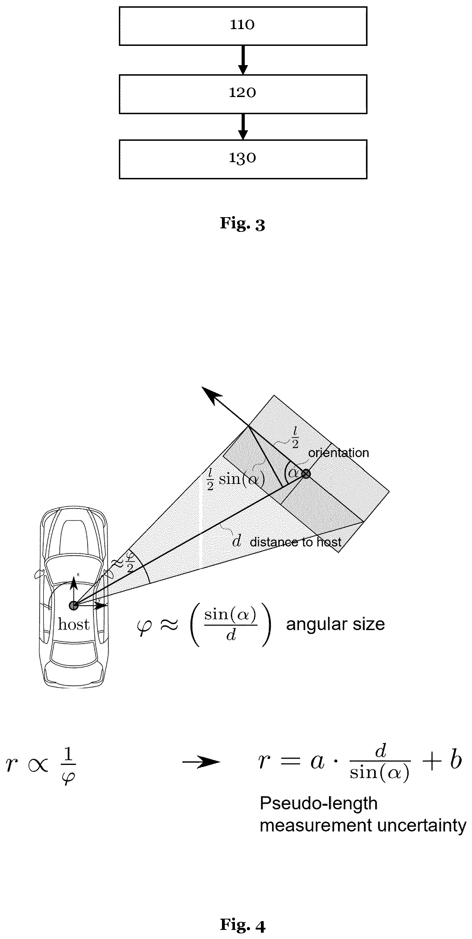

Fig. 3 illustrates a computer-implemented method for estimating an object size using range sensor detections detected by a range sensor mounted on a host vehicle. The method illustrated in Fig. 3 is not according the invention and is present for illustration purposes only. For an object detected by the range sensor detections, the method comprises several steps performed over time. In step 110, pseudo measurements of dimensions of a bounding box enclosing the detected object are determined, based on the range sensor detections. In step 120, an estimation of the dimensions of the bounding box is performed by determining estimates for the dimensions of the bounding box, based on respective previous pseudo measurements and current pseudo measurements, wherein the estimates are determined by taking into account a confidence measure for the range sensor detections. In step 130, the object size is determined based on the estimates.

Advantageously, the confidence measure for the range sensor detections is a measurement uncertainty of each pseudo measurement, such that the estimates are determined by taking into account the measurement uncertainty of each pseudo measurement. Specifically, the measurement uncertainty of each pseudo measurement may be calculated based on an object distance d of the detected object to the host and an orientation $\alpha$ of the detected object towards the host. According to the invention, the estimates are determined by applying a Kalman filter.

As noted above, any range sensor may be employed to acquire range detections, such as LiDAR sensors or radar sensors.

The dimensions of the bounding box include a width and a length, wherein the width is defined by distances measured from a reference point relative to a longitudinal axis of the detected object, and wherein the length is defined by distances measured from the reference point relative to a lateral axis of the detected object.

It should be noted that the reference point may be determined in any suitable manner. For instance, the reference point may represent the object's position and the point of turning around its axis. However, the reference point may be any point within the bounding box. For instance, the reference point may be chosen as the middle point of a vehicle's front bumper or the vehicle's rear axle middle point. The above discussed pseudo measurements are defined relative to the reference point.

As illustrated in Fig. 2a, the width of the bounding box is defined by a sum of a first width wid_1 extending, relative to the longitudinal axis (indicated by the black arrow in Fig. 2a), to the left from the reference point and a second width wid_2 extending, relative to the longitudinal axis, to the right from the reference point. Similarly, the length of the bounding box is defined by a sum of a first length len_1 extending, relative to the lateral axis, to the back from the reference point and a second length len_2 extending, relative to the lateral axis, to the front from the reference point.

According to the invention, determining the pseudo measurements of the dimensions of the bounding box comprises, over time, determining a pseudo measurement for each of the distances wid_1, wid_2, len_1, len_2 measured from the reference point by expanding each respective distance wid_1, wid_2, len_1, len_2 to the associated respective outer most range sensor detections with respect to the reference point. In Fig. 2b, the dashed lines illustrate a temporary bounding box defined by pseudo measurements pseudowid_1, pseudowid_2, pseudolen_1, pseudolen_2 for each of the respective distances wid_1, wid_2, len_1, len_2. These pseudo measurements are the inputs to the estimation performed by the Kalman filter. However, the pseudo measurements are changing in time according to the distance and angle towards the host, and hence, the resulting estimated bounding box which is output by the Kalman filter at the end of the estimation process is an aggregate of the pseudo measurements, wherein the individual pseudo measurements are weighted as discussed below, based on the object's distance and orientation towards the range sensor. It should be noted that the dashed bounding box as illustrated in Fig. 2b could result as the final estimated bounding box provided that the dashed box remains constant during the whole duration of the estimation process.

Fig. 4 illustrates the model of measurement uncertainty according to the invention. As noted above, the measurement uncertainty of each pseudo measurement is calculated based on an object distance d of the detected object to the host and an orientation $\alpha$ of the detected object towards the host. The model of measurement uncertainty illustrated in Fig. 4 is a key ingredient for the estimation performed according to the invention by using a Kalman filter.

As illustrated, the model is based on an angular size of edges of the detected object, and an object distance to the host. Hence, according to the invention, the individual pseudo measurements which are used over time as inputs to the estimation performed by the Kalman filter to provide a final estimation of the detected object's size are not always weighted equally, because the pseudo measurements become less accurate the further away the detected object is from the range sensor. Further, the accuracy of pseudo measurements may depend on other factors, e.g., on how much reflective surface a detected object is exposing towards the range sensor. Hence, according to the invention, to enhance accuracy of a size estimate based on the pseudo measurements, the measurement uncertainties r are weighted according to the object's distance d and orientation $\alpha$ towards the range sensor, as discussed in more detail below.

As illustrated in Fig. 4, the visibility of the detected object's length by the range sensor is assumed to be roughly represented by the angular size $\varphi$ which depends on the orientation $\alpha$ of the object towards the host vehicle and its distance d. The measurement uncertainty r is thus modelled as a reciprocal relationship with the object's angular size $\varphi$. Considering the detected object's length, its angular size will be smaller the greater its distance d and the smaller $\alpha$, i.e., its orientation towards the range sensor. Considering the detected object's width, then the distance has the same influence, but a bigger orientation towards the radar will increase the angular size.

Further with reference to Fig. 4, and regarding the measurement uncertainty r of each pseudo measurement as taken into account by the Kalman filter according to the present invention, the measurement uncertainty $r_{len}$ of the pseudo measurements of the first and second lengths len_1 and len_2 may be defined by

$$r_{len} = a_l \cdot \frac{d}{\sin(\alpha)} + b_l$$

and the measurement uncertainty $r_{wid}$ of the pseudo measurements of the first and second widths wid_1 and wid_2 may be defined by

$$r_{wid} = a_w \cdot \frac{d}{cos(\alpha)} + b_w$$

wherein $a_l$, $b_l$, $a_w$, $b_w$ may be calibration parameters.

As discussed above, whereas in the case that the pseudo lengths and widths are lowpass filtered to get temporally smooth results, the invention uses a Kalman filter to create mean values taking into account the confidence, or uncertainty, of pseudo measurements. The result is a more accurate estimate that is over time converging to the ground truth.

In particular, the size estimation provided by the Kalman filter according to the invention remains accurate when a detected object moves away from the host vehicle since the estimation performed by the Kalman filter has accumulated enough knowledge about the object's size, while in known approaches the size estimation will deteriorate since it merely reflects current measurements.

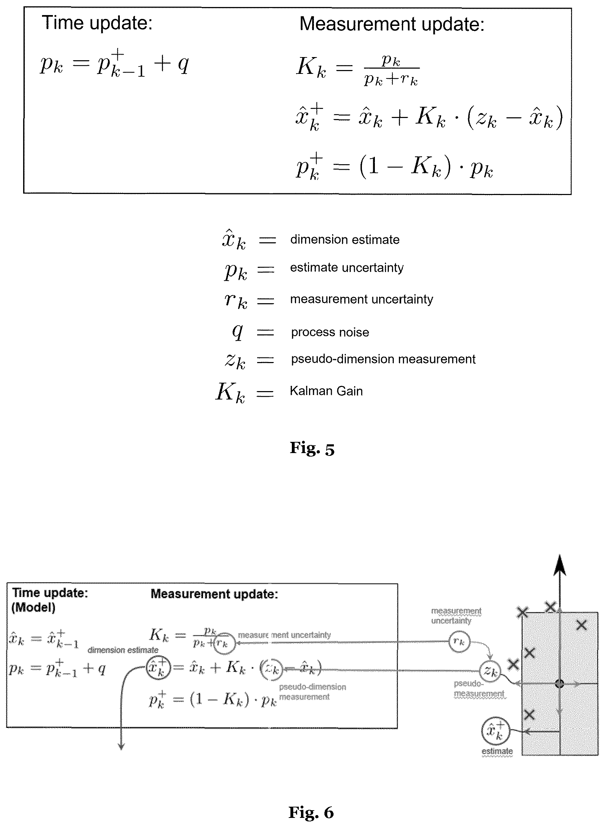

Figs. 5 and 6 illustrate the use of a Kalman Filter for an estimation of the size of a detected object according to the invention.

Fig. 5 illustrates the main calculations of the Kalman filter. The invention uses the Kalman Filter to gain estimates $\hat{x}_k$ with low uncertainty $p_k$ by accumulating

dimension information collected in the form of pseudo measurements $z_k$ over several time steps k. This is possible because the uncertainty $r_k$ of a respective pseudo measurement, which depends on the distance d and orientation of the object, is provided in the invention as the above described model, which describes how much each respective pseudo measurement should impact the size estimate at any given time instance of the estimation process performed by the Kalman filter.

Fig. 6 illustrates the recursive adding of new information to improve a size estimation for a detected object based on range sensor detections using a Kalman filter according to the invention.

According to further embodiments, prior to the main measurement update loop, i.e., during each time step k of the estimation process performed by the Kalman filter, preceding actions may be taken to achieve more accurate estimates. Examples for such preceding actions are discussed in the following.

According to one embodiment, prior to the determining of the pseudo measurements, the method comprises compensating measurement bias. Measurement bias stems from a distribution of radar detections across the whole detected object's geometry. Since radar detections that lie beyond the object's outer delimiting surface do not represent the object's outer dimensions, compensation of measurement bias may effectively suppress these biased detections. More specifically, the mean spread of detections (relative from the center), i.e., the mean pseudo width and length over time is biased towards smaller values because if the target is for instance a vehicle, a large amount of detections is reflected not only from the target vehicle's outside but also from its cabin inside, underbody, etc. It should be noted that this is the main contribution to the spread, not the measurement noise.

In order to compensate for this bias, the estimate uncertainty $p_k$ is reset to higher values whenever a pseudo measurement (pseudo width or pseudo length respectively) is greater than the current estimate (pseudo width or pseudo length respectively), that is when the detection is outside of the currently estimated bounding box. This can be formulated as follows:

$$if\,(pseudo\,wid > current\,wid)$$

$$p_k = p_k + \Delta p$$

Hence, because there is a bias in the pseudo measurements towards smaller values, detections outside the current bounding box estimate are weighted higher by incrementing the estimate uncertainty $p_k$ of the respective dimension. Accordingly, according to the invention, compensating measurement bias comprises, for each pseudo measurement based on a range sensor detection outside the current bounding box, increasing the estimate uncertainty $p_k$ for the respective dimension of the bounding box by a first factor $\Delta p$.

Generally, the estimate uncertainty $p_k$ over time decreases when accumulating detections, i.e., the estimator, i.e., the Kalman filter performing the estimation, is increasingly confident of the size estimate. New detections, e.g., from the target vehicle's surface, would have a low impact on the current estimation since already a lot of detections from, e.g., the vehicle cabin have contributed to the estimation. Therefore, resetting the estimate uncertainty $p_k$ whenever a new detection exceeds the value of the current estimate allows the estimator to take this detection more strongly into account and to adjust the estimation towards that outer detection. Eventually no more outer detections occur since the estimation will have increased so that every new detection will likely be inside the bounding box.

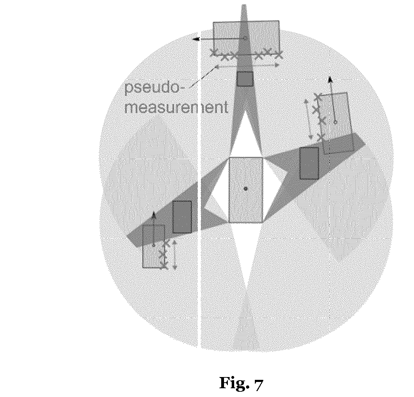

Fig. 7 illustrates an example scenario with object occlusion. According to a further embodiment, the method comprises handling such occlusions. Occlusions are blockages in the field of view of the host's radar by an occluding object that occludes the object whose size is to be estimated. For instance, if the detected object is at least partly occluded, the determining of estimates performed by the Kalman filter, is stopped until the detected object is no longer occluded. Effectively, the determining of estimates is frozen in that situation. In other words, the measurement update is disabled for objects that are partly or fully occluded because pseudo measurements do not reflect the whole length or width of the object in such a case. Stopping the estimation for the respective estimation cycle and effectively freezing the current estimates until the occlusion is removed prevents the occlusion to affect the size estimation of the detected object.

As an alternative or additional preceding action, in a further embodiment, the method comprises handling of merged objects prior to the determining of the pseudo measurements. Merging two objects without adjusting the merger's size can lead to size overestimation. Merging implies new data is available, therefore the estimate uncertainty $p_k$ is increased to allow for size adjustment based on new data. This can be formulated as follows:

$$p_k = c \cdot \mathrm{dim}$$

with $c \in [0,1]$ and $\mathrm{dim} \in \{len\_1, len\_2, wid\_1, wid\_2\}$. Hence, according to the invention, if the detected object is merged with a further object detected by the range sensor detections, for each of the pseudo measurements of the respective distances measured from the reference point the respective estimate uncertainty $p_k$ is increased by a second factor c.

The present invention allows for a more accurate estimation of the object size using range sensor detections. In particular, the present invention avoids the determining of fluctuating and especially shrinking bounding boxes for detected objects. Further, the invention allows a more stable bounding box edge alignment with respect to ground truth. Generally, the problem of a fluctuating object bounding box, i.e., when its width and length changes in value, depending on currently available range sensor detections is solved by using additional statistical data, e.g., confidence values for the range sensor detections and employing an estimation method that utilizes this information in an optimal way to estimate the size of a detected object more accurately. For instance, when estimating an object length for an object that is being overtaken by a host vehicle, while the estimated length according to known approaches may fluctuate with the current distribution of detection points, the estimation according to the invention converges towards the ground truth value. In particular, and in contrast to the invention, known approaches do not rely on a model of measurement uncertainties, which however allows to achieve more accurate and particularly non-fluctuating estimation results regarding the bounding box of a detected object.

The present invention may be useful in many applications of automotive advanced safety and autonomous driving. For instance, knowledge of the size of an object may be useful in the perception of the environment around a vehicle, and generally in any driving functions that rely on that perception, such as, e.g., blind spot warning, lane change assist, automatic emergency braking, evasive steering, etc. The more accurate the size estimate is, the more precise the driving functions using this knowledge can be. Further, the invention may be used in determining a movement instruction for a vehicle based on the determined object size of a detected object. The determined object size may also be used in a path planning or parking aid sub-system of the host vehicle. The various embodiments described above are provided by way of illustration only and should not be construed to limit the invention.

## Claims

1. A computer-implemented method for estimating an object size using range sensor detections detected by a range sensor mounted on a host vehicle, the method comprising:
   for an object detected by the range sensor detections, over time:

   determining (110), based on the range sensor detections, pseudo measurements of dimensions of a bounding box enclosing the detected object, and
   determining (120) estimates for the dimensions of the bounding box, based on respective previous pseudo measurements and current pseudo measurements, wherein the estimates are determined by taking into account a confidence measure for the range sensor detections, and
   determining (130) the object size based on the determined estimates,

wherein the estimates are determined by applying a Kalman filter,

**characterized in that** prior to the determining (110) of the pseudo measurements, the method comprises:

for each pseudo measurement based on a range sensor detection outside the current bounding box, weighting the range sensor detection higher compared to a range sensor detection inside the current bounding box, wherein the range sensor detection outside the current bounding box is weighted higher compared to a range sensor detection inside the current bounding box by increasing the estimate uncertainty for the respective dimension of the bounding box by a first factor.

2. The computer-implemented method of claim 1, wherein the confidence measure for the range sensor detections is a measurement uncertainty of each pseudo measurement, and wherein the estimates are determined by taking into account the measurement uncertainty of each pseudo measurement.

3. The computer-implemented method of claim 2, wherein the measurement uncertainty of each pseudo measurement is calculated based on an object distance d of the detected object to the host and an orientation $\alpha$ of the detected object towards the host.

4. The computer-implemented method of any of the preceding claims, wherein the range sensor detections include at least one of:

LiDAR detections, provided by a LiDAR sensor; and
radar detections, provided by a radar sensor.

5. The computer-implemented method of any of the preceding claims,

wherein the dimensions of the bounding box include a width and a length, and
wherein the width is defined by distances measured from a reference point relative to a longitudinal axis of the detected object, and wherein the length is defined by distances measured from the reference point relative to a lateral axis of the detected object.

6. The computer-implemented method of claim 5, wherein

the width of the bounding box is defined by a sum of a first width extending, relative to the longitudinal axis, to the left from the reference point and a second width extending, relative to the longitudinal axis, to the right from the reference point, and
the length of the bounding box is defined by a sum of a first length extending, relative to the lateral axis, to the back from the reference point and a second length extending, relative to the lateral axis, to the front from the reference point.

7. The computer-implemented method of claim 5 or 6, wherein the determining (110) of the pseudo measurements of the dimensions of the bounding box comprises, over time:
determining a pseudo measurement for each of the distances measured from the reference point by expanding each respective distance to the associated respective outer most range sensor detections with respect to the reference point.

8. The computer-implemented method of any of the preceding claims,
wherein, prior to the determining (110) of the pseudo measurements, the method comprises:
if the detected object is at least partly occluded, stopping the determining (120) of estimates until the detected object is no longer occluded, effectively freezing the determining of estimates.

9. The method of any of the preceding claims,
wherein, prior to the determining (110) of the pseudo measurements, the method comprises:
if the detected object is merged with a further object detected by the range sensor detections, increasing, for each of the pseudo measurements of the respective distances measured from the reference point, the respective estimate uncertainty by a second factor.

10. The method of any of the preceding claims, wherein the method further comprises at least one of:

determining a movement instruction for the host vehicle based on the determined object size;
using the determined object size in a path planning or parking aid sub-system of the host vehicle; and
using the determined object size for a driving function, wherein the driving function is one of blind spot warning, lane change assist, automatic emergency braking, and evasive steering.

11. A system comprising means for performing the steps of any of claims 1 to 10.

12. A computer-readable storage medium comprising instructions which, when executed by a computer, cause the computer to carry out the method of any of claims 1 to 10.

**Patentansprüche**

1. Ein computerimplementiertes Verfahren zum Schätzen einer Objektgröße unter Verwendung von Bereichssensordetektionen, die von einem Bereichssensor detektiert werden, der an einem Trägerfahrzeug montiert ist, wobei das Verfahren Folgendes umfasst:

   für ein Objekt, das von den Bereichssensordetektionen detektiert wird, im Laufe der Zeit:

   Bestimmen (110), basierend auf den Bereichssensordetektionen, von Pseudomessungen von Abmessungen eines Begrenzungsrahmens, der das detektierte Objekt umschließt, und
   Bestimmen (120) von Schätzungen für die Abmessungen des Begrenzungsrahmens, basierend auf jeweiligen vorherigen Pseudomessungen und aktuellen Pseudomessungen, wobei die Schätzungen unter Berücksichtigung eines Konfidenzmaßes für die Bereichssensordetektionen bestimmt werden, und
   Bestimmen (130) der Objektgröße basierend auf den bestimmten Schätzungen,
   wobei die Schätzungen durch Anwenden eines Kalman-Filters bestimmt werden,

   **dadurch gekennzeichnet, dass** das Verfahren vor dem Bestimmen (110) der Pseudomessungen Folgendes umfasst:

   für jede Pseudomessung basierend auf einer Bereichssensordetektion außerhalb des aktuellen Begrenzungsrahmens, Gewichten der Bereichssensordetektion höher im Vergleich zu einer Bereichssensordetektion innerhalb des aktuellen Begrenzungsrahmens,
   wobei die Bereichssensordetektion außerhalb des aktuellen Begrenzungsrahmens höher im Vergleich zu einer Bereichssensordetektion innerhalb des aktuellen Begrenzungsrahmens gewichtet wird, indem die Schätzungsunsicherheit für die jeweilige Abmessung des Begrenzungsrahmens um einen ersten Faktor erhöht wird.

2. Das computerimplementierte Verfahren nach Anspruch 1,
   wobei das Konfidenzmaß für die Bereichssensordetektionen eine Messungsunsicherheit jeder Pseudomessung ist, und wobei die Schätzungen unter Berücksichtigung der Messungsunsicherheit jeder Pseudomessung bestimmt werden.

3. Das computerimplementierte Verfahren nach Anspruch 2,
   wobei die Messungsunsicherheit jeder Pseudomessung basierend auf einem Objektabstand d des detektierten Objekts zum Träger und einer Ausrichtung $\alpha$ des detektierten Objekts zum Träger berechnet wird.

4. Das computerimplementierte Verfahren nach einem der vorhergehenden Ansprüche, wobei die Bereichssensordetektionen mindestens eines von Folgendem beinhalten:

   LiDAR-Detektionen, die von einem LiDAR-Sensor bereitgestellt werden; und
   Radardetektionen, die von einem Radarsensor bereitgestellt werden.

5. Das computerimplementierte Verfahren nach einem der vorhergehenden Ansprüche,

   wobei die Abmessungen des Begrenzungsrahmens eine Breite und eine Länge beinhalten, und
   wobei die Breite durch Abstände definiert ist, die von einem Referenzpunkt relativ zu einer Längsachse des detektierten Objekts gemessen werden, und wobei die Länge durch Abstände definiert ist, die von dem Referenzpunkt relativ zu einer Querachse des detektierten Objekts gemessen werden.

6. Das computerimplementierte Verfahren nach Anspruch wobei

   die Breite des Begrenzungsrahmens durch eine Summe einer ersten Breite, die sich relativ zu der Längsachse von dem Referenzpunkt nach links erstreckt, und einer zweiten Breite, die sich relativ zu der Längsachse von dem Referenzpunkt nach rechts erstreckt, definiert ist, und
   die Länge des Begrenzungsrahmens durch eine Summe einer ersten Länge, die sich relativ zu der Querachse von dem Referenzpunkt nach hinten erstreckt, und einer zweiten Länge, die sich relativ zu der Querachse von dem Referenzpunkt nach vorne erstreckt, definiert ist.

7. Das computerimplementierte Verfahren nach Anspruch 5 oder 6,
   wobei das Bestimmen (110) der Pseudomessungen der Abmessungen des Begrenzungsrahmens im Laufe der Zeit Folgendes umfasst:
   Bestimmen einer Pseudomessung für jeden der Abstände, die von dem Referenzpunkt gemessen werden, durch Erweitern jedes jeweiligen Abstands zu den zugehörigen jeweiligen äußersten Bereichssensordetektionen in Bezug auf den Referenzpunkt.

8. Das computerimplementierte Verfahren nach einem der vorhergehenden Ansprüche,

wobei das Verfahren vor dem Bestimmen (110) der Pseudomessungen Folgendes umfasst:

wenn das detektierte Objekt zumindest teilweise verdeckt ist, Stoppen des Bestimmens (120) von Schätzungen, bis das detektierte Objekt nicht mehr verdeckt ist, effektives Einfrieren des Bestimmens von Schätzungen.

9. Das Verfahren nach einem der vorhergehenden Ansprüche,

wobei das Verfahren vor dem Bestimmen (110) der Pseudomessungen Folgendes umfasst:

wenn das detektierte Objekt mit einem weiteren Objekt zusammengeführt wird, das von den Bereichssensordetektionen detektiert wird, Erhöhen, für jede der Pseudomessungen der jeweiligen Abstände, die von dem Referenzpunkt gemessen werden, der jeweiligen Schätzungsunsicherheit um einen zweiten Faktor.

10. Das Verfahren nach einem der vorhergehenden Ansprüche, wobei das Verfahren ferner mindestens eines der Folgenden umfasst:

Bestimmen einer Bewegungsanweisung für das Trägerfahrzeug basierend auf der bestimmten Objektgröße;
Verwenden der bestimmten Objektgröße in einem Pfadplanungs- oder Einparkhilfe-Teilsystem des Trägerfahrzeugs; und
Verwenden der bestimmten Objektgröße für eine Fahrfunktion, wobei die Fahrfunktion eines von Totwinkelwarnung, Spurwechselunterstützung, automatischer Notbremsung und Ausweichlenkung ist.

11. Ein System, das Mittel zum Durchführen der Schritte nach einem der Ansprüche 1 bis 10 umfasst.

12. Ein computerlesbares Speichermedium, das Anweisungen umfasst, die, wenn sie von einem Computer ausgeführt werden, den Computer veranlassen, das Verfahren nach einem der Ansprüche 1 bis 10 auszuführen.


**Revendications**

1. Un procédé implémenté par calculateur pour l'estimation d'une taille d'un objet en utilisant des détections de capteur de portée détectées par un capteur de portée monté sur un véhicule hôte, le procédé comprenant :

pour un objet détecté par les détections de capteur de portée, dans le temps :

la détermination (110), sur la base des détections de capteur de portée, de pseudomesures de dimensions d'une boîte englobante délimitant l'objet détecté, et
la détermination (120) d'estimées pour les dimensions de la boîte englobante, sur la base de pseudomesures antérieures respectives et de pseudomesures courantes, les estimées étant déterminées en prenant en compte une mesure de confiance pour les détections de capteur de portée, et
la détermination (130) de la taille de l'objet sur la base des estimées déterminées, les estimées étant déterminées par application d'un filtre de Kalman,

**caractérisé en ce que**, avant la détermination (110) des pseudomesures, le procédé comprend :

pour chaque pseudomesure basée sur une détection de capteur de portée hors de la boîte englobante courante, la pondération de la détection de capteur de portée plus fort qu'une détection de capteur de portée à l'intérieur de la boîte englobante,
dans lequel la détection de capteur de portée en dehors de la boîte englobante est pondérée plus fort qu'une détection de capteur de portée à l'intérieur de la boîte englobante courante, en augmentant d'un premier facteur l'incertitude de l'estimée pour la dimension respective de la boîte englobante.

2. Le procédé implémenté par calculateur de la revendication 1,

dans lequel la mesure de confiance pour les détections de capteur de portée est une incertitude de mesure de chaque pseudomesure, et dans lequel les estimées sont déterminées en prenant en compte l'incertitude de mesure de chaque pseudomesure.

3. Le procédé implémenté par calculateur de la revendication 2,

dans lequel l'incertitude de mesure de chaque pseudomesure est calculée sur la base d'une distance à l'objet $d$ de l'objet détecté à l'hôte, et d'une orientation $\alpha$ de l'objet détecté en direction de l'hôte.

4. Le procédé implémenté par calculateur de l'une des revendications précédentes, dans lequel les détections de capteur de portée comprennent au moins l'une d'entre :

des détections LiDAR, délivrées par un capteur LiDAR ; et
des détections radar, délivrées par un capteur radar.

**5.** Le procédé implémenté par calculateur de l'une des revendications précédentes,

dans lequel les dimensions de la boîte englobante comprennent une largeur et une longueur, et
dans lequel la largeur est définie par des distances mesurées depuis un point de référence par rapport à un axe longitudinal de l'objet détecté, et dans lequel la longueur est définie par des distances mesurées depuis le point de référence par rapport à un axe latéral de l'objet détecté.

**6.** Le procédé implémenté par calculateur de la revendication dans lequel

la largeur de la boîte englobante est définie par une somme d'une première largeur s'étendant, par rapport à l'axe longitudinal, vers la gauche depuis le point de référence et d'une seconde largeur s'étendant, par rapport à l'axe longitudinal, vers la droite depuis le point de référence, et la longueur de la boîte englobante est définie par une somme d'une première longueur s'étendant, par rapport à l'axe latéral, vers l'arrière depuis le point de référence et d'une seconde longueur s'étendant, par rapport à l'axe latéral, vers l'avant depuis le point de référence.

**7.** Le procédé implémenté par calculateur de la revendication 5 ou 6,
dans lequel la détermination (110) des pseudomesures des dimensions de la boîte englobante comprend, dans le temps :
la détermination d'une pseudomesure pour chacune des distances mesurées depuis le point de référence en prolongeant chaque distance respective aux détections de capteur de portée respectives les plus extérieures par rapport au point de référence.

**8.** Le procédé implémenté par calculateur de l'une des revendications précédentes,
dans lequel, avant la détermination (110) des pseudomesures, le procédé comprend :
si l'objet détecté est au moins partiellement occulté, l'arrêt de la détermination des estimées jusqu'à ce que l'objet détecté ne soit plus occulté, avec pour effet de geler la détermination des estimées.

**9.** Le procédé de l'une des revendications précédentes,
dans lequel, avant la détermination (110) des pseudomesures, le procédé comprend :
si l'objet détecté est fusionné avec un autre objet détecté par les détections de capteur de portée, l'augmentation, pour chacune des pseudomesures des distances respectives mesurées depuis le point de référence, de l'incertitude d'estimée, d'un second facteur.

**10.** Le procédé de l'une des revendications précédentes, dans lequel le procédé comprend en outre au moins l'une d'entre :

la détermination d'une instruction de déplacement pour le véhicule hôte sur la base de la dimension déterminée de l'objet ;
l'utilisation, dans un sous-système de planification de trajet ou d'aide au stationnement du véhicule hôte, de la dimension de l'objet déterminée ; et
l'utilisation, pour une fonction de conduite, de la taille déterminée de l'objet, la fonction de conduite étant l'une d'entre un avertissement d'angle mort, une assistance au changement de voie, un freinage d'urgence automatique, et une conduite d'évitement.

**11.** Un système comprenant des moyens pour mettre en œuvre les étapes de l'une des revendications 1 à 10.

**12.** Un support de stockage lisible par calculateur comprenant des instructions qui, lorsqu'elles sont exécutées par un calculateur, font en sorte que le calculateur mette en œuvre le procédé de l'une des revendications 1 à 10.

Fig. 1

Fig. 2

11

**Fig. 3**

$$\varphi \approx \left( \frac{\sin(\alpha)}{d} \right) \text{ angular size}$$

$$r \propto \frac{1}{\varphi} \qquad \longrightarrow \qquad r = a \cdot \frac{d}{\sin(\alpha)} + b$$

Pseudo-length
measurement uncertainty

**Fig. 4**

| Time update: | Measurement update: |
|---|---|
| $$p_k = p_{k-1}^+ + q$$ | $$K_k = \frac{p_k}{p_k + r_k}$$ $$\hat{x}_k^+ = \hat{x}_k + K_k \cdot (z_k - \hat{x}_k)$$ $$p_k^+ = (1 - K_k) \cdot p_k$$ |

$\hat{x}_k$ = dimension estimate

$p_k$ = estimate uncertainty

$r_k$ = measurement uncertainty

$q$ = process noise

$z_k$ = pseudo-dimension measurement

$K_k$ = Kalman Gain

**Fig. 5**

**Fig. 6**

**Fig. 7**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102019107650 A1
- EP 1298454 A2
- US 2018322650 A1
- US 2022206162 A1
- US 2022205779 A1